# FASCICULE DE BREVET EUROPEEN

(11) **EP 4 413 323 B1**
(45) Date de publication et mention de la délivrance du brevet: **02.12.2026**
(21) Numéro de dépôt: 22778022.8
(22) Date de dépôt: 06.10.2022
(51) Int. Cl.: G01B 9/02055, G01B 9/0209, G01B 11/00, G01B 11/14, G01B 11/24, G01M 11/02, G02B 27/62

(54) **PROCÉDÉ ET DISPOSITIF DE MESURE D'INTERFACES D'UN ÉLÉMENT OPTIQUE**
VERFAHREN UND VORRICHTUNG ZUR MESSUNG VON GRENZFLÄCHEN EINES OPTISCHEN ELEMENTS
METHOD AND DEVICE FOR MEASURING INTERFACES OF AN OPTICAL ELEMENT

(30) Priorité: 08.10.2021 FR 2110695
(43) Date de publication de la demande: 14.08.2024
(73) Titulaire: Fogale Nanotech, 30900 Nîmes (FR)
(72) Inventeur: LEGROS, Eric, 30900 Nîmes (FR); PETITGRAND, Sylvain, 30132 Caissargues (FR)
(74) Mandataire: IPAZ
(86) Numéro de dépôt international: PCT/EP2022/077761
(87) Numéro de publication internationale: WO 2023/057539

(56) Documents cités:
- EP-A2- 2 369 319
- WO-A1-2020/245511

## Description

### Domaine technique

La présente invention concerne un procédé de mesure d'une information géométrique d'interfaces dans un élément optique comprenant aux moins deux interfaces. Elle concerne également un dispositif de mesure d'une information géométrique d'interfaces dans un tel élément optique.

Le domaine de l'invention est, de manière non limitative, celui des systèmes de contrôle et de mesure optiques, notamment pour la fabrication d'éléments optiques.

### Etat de la technique

Les éléments optiques, tels que des assemblages optiques ou des objectifs d'imagerie, sont en général constitués d'une ou d'une pluralité de lentilles et éventuellement d'autres composants destinés à mettre des faisceaux optiques en forme. Ces composants, ou ces lentilles, peuvent être assemblés sous forme d'empilement dans un support tel qu'un barillet.

Les performances optiques d'un élément optique, par exemple un objectif d'imagerie, dépendent essentiellement de la précision de fabrication des composants optiques (tels que les lentilles) qui le composent, et de la précision avec laquelle ils sont positionnés dans l'assemblage. Lors de la fabrication des éléments optiques, il est alors nécessaire de contrôler ou mesurer des positions d'éléments constitutifs ou des espaces entre éléments constitutifs, le long d'un axe de mesure tel que l'axe optique de l'élément optique, en vue de déterminer par exemple des éléments non conformes ou mal positionnés, déformés, ou inclinés.

Pour cela, il est notamment connu d'utiliser des techniques d'interférométrie à faible cohérence. Un faisceau optique de mesure issu d'une source optique à spectre large est propagé au travers des surfaces de l'élément optique. Les réflexions du faisceau sur ces surfaces sont collectées et analysées en les faisant interférer entre elles et/ou avec un faisceau de référence pour déterminer les différences de trajets optiques entre faisceaux interférents, et de là en déduire les positions et/ou distances entre surfaces ou interfaces correspondantes. On peut ainsi, par exemple, déterminer des épaisseurs de lentilles, des distances entre lentilles et/ou des positions de lentilles dans un assemblage optique.

Par exemple, WO 2020/245511 A1 décrit un procédé de mesure d'interfaces d'un élément optique par un interféromètre à faible cohérence et des moyens de positionnement configurés pour positionner relativement une zone de cohérence du capteur interférométrique au niveau de l'interface à mesurer. L'identification de composants optiques erronés ou hors spécifications dans un élément optique est réalisée lors d'une phase d'analyse en comparant des mesures de distances, d'épaisseurs ou de formes avec des grandeurs de référence issues de la conception de l'élément optique.

De telles techniques de mesure fonctionnent en général en rétro-réflexion. Le faisceau optique de mesure est généralement incident sur toutes les surfaces à mesurer selon une incidence normale ou perpendiculaire, de sorte à générer une onde réfléchie qui puisse être captée par le système de mesure. Pour la mesure d'un assemblage optique, cette condition implique en général de devoir superposer ou aligner le faisceau de mesure avec l'axe optique de l'assemblage, et en particulier des lentilles qui le composent. Des mesures d'épaisseurs et de séparation de lentilles sont principalement effectuées. Dans la pratique, pour obtenir les niveaux de précision adaptés, il faut pouvoir positionner le faisceau de mesure relativement à l'axe optique d'un assemblage avec une précision, par exemple, de l'ordre du micron pour des objets de plusieurs millimètres de dimensions. Un autre exemple de difficulté concerne les mesures des distances de séparation de lentilles très rapprochées, par exemple de l'ordre de 15 à 30 µm, difficiles à résoudre avec les méthodes connues.

### Exposé de l'invention

Un but de la présente invention est de pallier ces inconvénients.

Il est notamment un but de l'invention de proposer un procédé et un dispositif de mesure, pour mesurer des paramètres géométriques d'interfaces ou de surfaces d'un élément optique comprenant au moins deux interfaces, ce dispositif et ce procédé permettant des mesures améliorées d'interfaces dans un assemblage optique.

Un autre but de la présente invention est de proposer un procédé et un dispositif de mesure adaptés pour mesurer ou contrôler le positionnement d'interfaces dans un élément optique à travers d'autres interfaces de cet élément optique.

Il est encore un but de la présente invention de proposer un procédé et un dispositif de mesure pour mesurer les positions relatives de plusieurs interfaces d'un élément optique permettant d'améliorer le processus de fabrication d'éléments optiques individuels ou d'assemblages de plusieurs éléments optiques.

Au moins un de ces buts est atteint avec un procédé de mesure, pour mesurer une information géométrique d'une interface à mesurer d'un élément optique comprenant aux moins deux interfaces, le procédé étant mis en œuvre par un dispositif de mesure comprenant des moyens de mesure interférométriques avec au moins un capteur optique et une source à faible cohérence configurés pour diriger un faisceau de mesure vers l'élément optique de sorte à traverser au moins une des deux interfaces et à être réfléchi par l'interface à mesurer et générer un faisceau de mesure réfléchi, et pour détecter sélectivement un signal d'interférence résultant d'interférences entre le faisceau de mesure réfléchi et un faisceau de référence, le dispositif comprenant en outre des moyens de positionnement et des moyens numériques de traitement, le procédé comprenant les étapes suivantes :
- positionnement relatif, par les moyens de positionnement, d'une zone de cohérence des moyens de mesure interférométriques au niveau d'une interface à mesurer ;
- mesure de l'interface par les moyens de mesure interférométriques, de sorte à produire une pluralité de signaux d'interférence correspondant à une pluralité de points de mesure sur l'interface ; et
- traitement des signaux d'interférence par les moyens numériques de traitement, le traitement comprenant les étapes suivantes :
   ∘ construction d'une interface mathématique à partir d'au moins un sous-ensemble de signaux d'interférence pour l'interface,
   ∘ détermination, à partir de l'interface mathématique et d'une forme attendue d'au moins une première section de l'interface, d'une information géométrique de l'interface à mesurer, l'étape de détermination étant réalisée par les étapes suivantes :
      - déduction de paramètres d'un modèle ou d'une formulation analytique de la première section de l'interface ;
      - modélisation de la forme d'une seconde section de l'interface à mesurer, à partir des paramètres déduits, la seconde section de l'interface étant égale à ou différente de la première section de l'interface.

Dans le cadre de la présente invention, un « élément optique » peut désigner tout type d'objet optique, destiné par exemple à être inséré dans un faisceau optique, à mettre en forme un faisceau optique, et/ou à réaliser une image. Il peut désigner par exemple :
- un composant optique unique tel qu'une lentille ou une lame ;
- un assemblage de lentilles et/ou d'autres composants optiques, tel qu'un objectif d'imagerie, de caméra, ou un dispositif de mise en forme d'un faisceau optique.

Un élément optique peut notamment être constitué de, ou comprendre, des éléments réfractifs tels que des lentilles. Ces composants, ou ces lentilles, peuvent notamment être assemblés dans un barillet, ce barillet pouvant aussi contenir des espaceurs et/ou des lames, comme par exemples des filtres.

Le procédé selon la présente invention permet d'effectuer des mesures d'interfaces d'un élément optique, et notamment d'interfaces empilées, pour en déduire la topologie de ces interfaces. Ces interfaces peuvent par exemple comprendre des surfaces de lentilles. Les mesures permettent de déterminer, par exemple, des formes géométriques et des positionnements des interfaces, ou une inclinaison ou un décentrement d'une lentille dans l'élément optique, ou d'une face d'une lentille par rapport à son autre face. Il est également possible de déduire des mesures d'épaisseur et l'indice de réfraction du matériau d'une lentille composant l'élément optique.

Ces mesures sont réalisées avec un faisceau de mesure d'un capteur interférométrique illuminé par une source lumineuse à faible cohérence. Le faisceau de mesure définit un axe de mesure du dispositif de mesure. Une zone de cohérence des moyens de mesure interférométriques est positionnée relativement au niveau d'au moins une interface à mesurer. L'interface à mesurer peut être une interface « enterrée », c'est-à-dire, l'une des interfaces à l'intérieur de l'élément optique. Pour arriver à une telle interface enterrée, le faisceau de mesure doit donc traverser d'autres interfaces de l'élément optique.

Par « zone de cohérence », on entend la zone dans laquelle des interférences entre le faisceau de mesure et un faisceau de référence peuvent se former sur le capteur. La zone de cohérence peut être déplacée en variant la différence de la longueur du chemin optique entre les deux faisceaux, par exemple en modifiant la longueur optique d'un des faisceaux ou des deux. Lorsque la zone de cohérence se trouve au niveau d'une interface, des signaux d'interférence entre le faisceau de mesure réfléchi par cette interface et le faisceau de référence peuvent être acquis.

Le procédé selon l'invention permet de détecter sélectivement un signal d'interférence pour chaque section d'interface au niveau de laquelle la zone de cohérence est positionnée, c'est-à-dire pour chaque surface se trouvant dans la zone de cohérence. En effet, la longueur de cohérence de la source lumineuse est ajustée de sorte à être plus courte qu'une distance optique minimale entre deux interfaces adjacentes de l'élément optique. Ainsi, pour chaque mesure, une seule interface se trouve dans la zone de cohérence, et donc, un signal d'interférence acquis ne comprend que la contribution d'une seule interface, ou ne provient que d'une seule interface.

Les mesures des interférences sont effectuées selon un champ de vue déterminé par les moyens de mesure du dispositif. Les mesures peuvent ainsi être réalisées soit en plein champ, soit par balayage du champ de vue.

Chaque section d'interface est mesurée en une pluralité de points de mesure sur cette interface, de sorte à produire une pluralité de signaux d'interférence. La zone mesurée peut couvrir la totalité ou seulement une partie de l'interface considérée. Il n'est pas nécessaire de positionner la zone de cohérence de manière centrée au niveau de l'interface. L'interface peut également être mesurée en dehors d'une zone centrale, par exemple en périphérie.

Le traitement des signaux d'interférence, par des moyens numériques de traitement, comprend la construction d'une interface mathématique à partir d'au moins un sous-ensemble de signaux d'interférence acquis pour la section d'interface. En effet, des signaux interférence acquis en différentes positions sur la section d'interface par rapport à un axe de l'élément optique sont utilisés pour calculer une surface ou interface mathématique, représentant la zone mesurée de l'interface. A partir de cette représentation mathématique d'une partie ou de la totalité de l'interface, et en considérant une forme attendue de l'interface, une information géométrique de l'interface peut être déterminée.

Cette information géométrique peut concerner la forme optique et/ou la forme géométrique de la section d'interface à mesurer, et/ou des distances optiques, ou géométriques, représentatives de la forme et/ou de la position de l'interface.

L'information géométrique peut comprendre des paramètres géométriques de l'interface tels que :
- la position de l'apex, par rapport à un axe de l'élément optique, ou relativement à la position de l'apex d'une autre interface,
- le centre de courbure, par rapport à un axe de l'élément optique, ou relativement celui d'une autre interface,
- la forme optique du profil de l'interface, et/ou
- l'axe optique, représenté, par exemple, par une normale à l'interface au point d'apex, par rapport à un axe de l'élément optique.

L'information géométrique obtenue peut être exploitée, lors d'une étape d'analyse, pour produire d'autres informations concernant l'interface et/ou l'élément optique, telles que :
- un décentrement et/ou une inclinaison de l'interface ;
- une position relative, un décentrement et/ou une inclinaison d'une interface relativement à une autre, une inclinaison relative entre lentilles ou selon un axe et entre interfaces d'une même lentille,
- une distance optique entre points caractéristiques de deux interfaces, ainsi que l'épaisseur de lentilles ou leur espacement (« air gap ») ;
- les axes optiques ;
- le décalage en position des apex de lentilles ; et/ou
- des angles relatifs entre lentilles ou relativement à une référence (comme l'axe du barillet ou l'axe du dispositif de mesure).

La forme attendue de l'interface peut être une surface typique ou plausible pour l'interface considérée. Par exemple, pour une lentille, la forme attendue pour les deux interfaces peut être une portion de sphère.

Le procédé selon la présente invention permet de déterminer de l'information géométrique d'interfaces d'un élément optique de manière fiable et indépendant du positionnement du faisceau de mesure par rapport à l'interface. Grâce à la construction, à partir d'un ensemble de signaux d'interférence pour l'interface, de l'interface mathématique représentant une zone ou partie de l'interface mesurée, l'information géométrique peut être obtenue en comparant cette interface mathématique avec une forme attendue. Ainsi, en mesurant une partie seulement de l'interface, une information géométrique concernant la totalité de l'interface, telle que sa forme de profil, peut être déduite. Ainsi, il n'est notamment pas nécessaire de positionner le faisceau de mesure au centre de l'interface pour en déterminer l'apex.

Aussi, il est possible de déterminer des valeurs relatives de distance (épaisseur, séparation entre interfaces) indirectement à partir de points déduits de la comparaison entre la forme attendue et l'interface mathématique, ces points n'étant pas nécessairement mesurés directement. En conséquence, il est possible d'atteindre des résolutions de séparation entre des points d'interfaces différentes meilleures qu'une limite théorique qui est liée à la longueur de cohérence imposée par la source lumineuse mise en œuvre, en plaçant le faisceau de mesure dans des zones plus espacées que cette limite des interfaces considérées.

La première section de l'interface peut comprendre un élément de surface, ou plusieurs éléments de surface distincts.

Ainsi, l'information géométrique peut être déterminée pour un élément de surface appartenant à la première section de l'interface, ou bien pour un élément de surface n'appartenant pas à la première section de l'interface.

Les formes ou distances dites « optiques » sont les formes ou distances telles qu'elles sont « vues » par le faisceau de mesure. Les distances ou formes de surfaces géométriques s'en déduisent en prenant en compte l'indice de réfraction des milieux traversés par le faisceau de mesure.

En outre, lorsque le faisceau de mesure traverse des interfaces avant l'interface mesurée, le signal d'interférence est représentatif d'une forme ou d'une distance « apparente » dans la mesure où elle inclut la contribution de la ou des interfaces traversées, en particulier lorsque ces interfaces sont situées entre deux milieux d'indice de réfraction différent, et donc dévient ou modifient le faisceau de mesure par réfraction et/ou diffraction en fonction de leur forme. Il faut donc prendre en compte la forme de ces interfaces traversées, comme expliqué plus loin, pour obtenir la forme géométrique « réelle » de l'interface mesurée.

Selon un mode de réalisation, l'étape de la construction de l'interface mathématique peut être réalisée par la production d'une mesure avec une information de position relative de l'interface et/ou une mesure d'amplitude du signal d'interférence, pour chaque signal d'interférence du sous-ensemble de signaux d'interférence.

Ces mesures caractéristiques des signaux d'interférence peuvent être enregistrées sous forme de tableau en fonction de la position du faisceau de mesure sur l'interface dans un plan perpendiculaire à l'axe de mesure, pour l'ensemble des interfaces de l'élément optique. L'information de position peut être fournie, par exemple, par les moyens de positionnement de la zone de cohérence, des calculs des phases des signaux d'interférence ou de topographie, etc.

La forme attendue de l'interface peut comprendre une fonction d'interpolation pour interpoler les points de mesure.

La fonction d'interpolation peut être, par exemple, une fonction classique telle qu'un polynôme d'ordre n.

Des fonctions d'interpolations sont particulièrement adaptées lorsque seulement des parties de l'interface sont mesurées et pour laquelle il n'est pas nécessaire d'obtenir un profil complet.

Alternativement, la forme attendue de l'interface peut comprendre un profil théorique d'au moins la première section de l'interface.

Le profil théorique peut être, par exemple, un profil sphérique.

Selon l'invention, l'étape de détermination de l'information géométrique est réalisée par les étapes suivantes :
- déduction de paramètres d'un modèle ou d'une formulation analytique de la première section de l'interface ;
- modélisation de la forme d'une seconde section de l'interface à mesurer, à partir des paramètres déduits, la seconde section de l'interface étant égale à ou différente de la première section de l'interface.

Lorsque la seconde section de l'interface est égale ou comprise dans la première section, la forme de la seconde section peut notamment être modélisée en interpolant le modèle ou la formulation analytique de la première section.

Lorsque la seconde section de l'interface dépasse la première section, la forme de la seconde section peut notamment être modélisée en extrapolant le modèle ou la formulation analytique de la première section.

Selon un exemple, la détermination de l'information géométrique peut être réalisée au moyen d'une équation ayant des paramètres variables, tels que ceux déterminant une translation et/ou une rotation de l'interface. La courbure locale de l'interface peut également être considérée comme variable.

L'utilisation d'une équation permet une représentation très compacte de l'interface. Par ailleurs, pour des interfaces pour lesquelles certaines symétries sont attendues, telles que des portions de sphère, l'équation peut contenir intrinsèquement des notions de symétrie.

Au moins l'étape de positionnement de la zone de cohérence et l'étape de mesure peuvent être mises en œuvre de manière séquentielle, ou successivement, pour la mesure de l'information géométrique de différentes interfaces à mesurer.

Ainsi, l'ensemble des interfaces d'un élément optique peuvent être mesurées, par exemple, en commençant par l'interface supérieure et en terminant par l'interface inférieure, en passant par toutes les interfaces intermédiaires « enterrées », sans qu'il soit nécessaire de retourner ou manipuler l'élément optique.

Le traitement des signaux interférométriques acquis pour les interfaces successives peut être réalisé séquentiellement, entre des mesures sur les différentes interfaces, ou une fois tous les signaux d'interférence, pour toutes les interfaces, acquis.

De manière avantageuse, l'étape de traitement du signal d'interférence peut comprendre en outre une étape de correction prenant en compte une information géométrique des interfaces traversées par le faisceau de mesure, pour obtenir une information géométrique de l'interface à mesurer.

En effet, comme expliqué précédemment, lors de la mesure de surfaces ou interfaces « enterrées » dans l'élément optique, les informations géométriques mesurées peuvent également dépendre des milieux et des formes des interfaces traversées par le faisceau de mesure avant d'atteindre ces surfaces enterrées, notamment dû à des modifications de fronts d'ondes par des sauts d'indice de réfraction et différentes courbures des interfaces traversées, et éventuellement des aberrations introduites. Dans ce cas, une correction doit être appliquée pour déterminer les informations géométriques réelles des interfaces.

Pour effectuer cette correction, il est possible d'utiliser un modèle de propagation de la lumière et des connaissances a priori ou acquises lors de mesures précédentes sur l'élément optique, telles que des indices de réfraction de matériaux et des positions et des formes d'interfaces traversées.

De manière avantageuse, le procédé peut comprendre en outre une étape de correction d'angle d'un axe optique de l'élément optique par rapport à un axe de mesure.

En effet, l'axe optique de l'élément optique peut ne pas coïncider avec l'axe de mesure.

La détermination d'une ou plusieurs informations géométriques de l'interface à mesurer peut être à nouveau réalisée en tenant compte de la correction d'angle. Cette étape de correction permet d'obtenir des informations géométriques de l'interface plus précises.

Cette étape supplémentaire de correction d'angle peut consister en des mesures complémentaires pour rechercher un autre système de coordonnées rattaché à l'élément optique, plutôt qu'au dispositif de mesure.

Selon un autre mode de réalisation nullement limitatif, l'étape de traitement des signaux d'interférence peut mettre en œuvre un procédé de calcul par holographie numérique dans une mise en œuvre de l'invention selon une détection plein champ.

Pour chaque signal d'interférence ou interférogramme enregistré, une méthode d'holographie numérique peut être utilisée pour reconstruire l'interface considérée numériquement, en simulant le processus d'illumination de l'interférogramme sur le capteur avec une onde de référence numérique. Une telle méthode a l'avantage de ne nécessiter qu'une seule image ou acquisition de signal d'interférence pour calculer la forme d'une surface optique.

Suivant un autre aspect de l'invention, il est proposé un dispositif de mesure, pour mesurer une information géométrique d'une interface à mesurer d'un élément optique comprenant au moins deux interfaces, le dispositif comprenant :
- des moyens de mesure interférométriques comprenant au moins une source de lumière à faible cohérence et au moins un capteur optique, configurés pour :
   ∘ former au moins un faisceau de mesure et au moins un faisceau de référence,
   ∘ diriger le faisceau de mesure vers l'élément optique de sorte à traverser au moins une des au moins deux interfaces et à être réfléchi par l'interface à mesurer et générer un faisceau de mesure réfléchi,
   ∘ détecter sélectivement une pluralité de signaux d'interférence résultant d'interférences entre le faisceau de mesure réfléchi par l'interface à mesurer, respectivement, et le faisceau de référence pour une pluralité de points de mesure sur l'interface ;
- des moyens de positionnement configurés pour positionner relativement une zone de cohérence des moyens de mesure interférométriques au niveau de l'interface à mesurer ; et
- des moyens numériques de traitement configurés pour :
   ∘ construire une interface mathématique à partir d'au moins un sous-ensemble de signaux d'interférence pour l'interface,
   ∘ déterminer, à partir de l'interface mathématique et d'une forme attendue de l'interface, une information géométrique de l'interface à mesurer, les moyens numériques de traitement étant configurés pour :
      - déduire des paramètres d'un modèle ou d'une formulation analytique de la première section de l'interface ;
      - modéliser la forme d'une seconde section de l'interface à mesurer, à partir des paramètres déduits, la seconde section de l'interface étant égale à ou différente de la première section de l'interface.

Selon un mode de réalisation, les moyens de mesure interférométriques peuvent comprendre un capteur interférométrique, dit capteur interférométrique en mode point, configuré pour détecter un signal d'interférences ponctuel en un point du champ de vue.

Dans ce cas, une pluralité de signaux interférométriques est acquise en balayant l'ensemble du champ de vue selon une pluralité de points de mesure sur l'interface, afin d'obtenir des informations de forme sur toute l'interface.

Alternativement ou en plus, les moyens de mesure interférométriques peuvent comprendre un capteur interférométrique, dit capteur interférométrique en plein champ, configuré pour détecter un signal d'interférence en plein champ dans le champ de vue.

Dans ce cas, l'interface à mesurer peut être imagée selon le champ de vue en une seule mesure.

Selon un exemple, le dispositif peut comprendre un capteur interférométrique avec un interféromètre de Michelson.

Selon un autre exemple, le dispositif peut comprendre un capteur interférométrique avec un interféromètre de Mach-Zehnder.

Les moyens de positionnement peuvent être configurés pour positionner la zone de cohérence successivement au niveau de différentes interfaces de l'élément optique.

Ceci permet l'acquisition et le traitement de signaux interférométriques pour chaque interface de manière séquentielle et séparée, afin d'obtenir des informations de forme pour l'ensemble des interfaces de l'élément optique.

Le dispositif selon l'invention peut comprendre en outre des moyens de déplacement configurés pour déplacer l'élément optique relativement au faisceau de mesure dans un plan perpendiculaire à un axe de mesure.

Ainsi, dans le cas d'un capteur interférométrique en mode point, par exemple, le champ de vue peut être balayé selon une pluralité de points de mesure.

De même, dans le cas d'un capteur interférométrique en plein champ, le champ de vue peut être balayé selon une pluralité de champs de vue partiels.

Le dispositif selon l'invention peut comprendre en outre des moyens de déplacement angulaire configurés pour déplacer un axe optique de l'élément optique relativement à un axe de mesure.

Grâce aux moyens de positionnement et aux moyens de déplacement, il est également possible de positionner la zone de cohérence à un endroit souhaité sur l'interface à mesurer, et notamment dans des zones périphériques, espacées de l'axe optique de l'élément optique.

Le procédé et le dispositif selon l'invention peuvent être mis en œuvre, notamment, pour la mesure d'éléments optiques ou d'assemblages optiques lors de leur production, par exemple des objectifs formés de lentilles ou de microlentilles tels que des objectifs de smartphone ou pour l'industrie automobile.

Ils permettent notamment d'obtenir ou de construire des valeurs géométriques caractéristiques pour des interfaces d'intérêt dans un élément optique, comparer des valeurs caractéristiques attendues et mesurées avec des valeurs seuils et ainsi valider ou rejeter un composant d'élément optique au cours du processus de production.

### Description des figures et modes de réalisation

D'autres avantages et caractéristiques apparaîtront à l'examen de la description détaillée d'exemples nullement limitatifs, et des dessins annexés sur lesquels :
- la Figure 1 est une représentation schématique d'un exemple de dispositif de mesure pouvant être mis en œuvre dans le cadre de la présente invention ;
- la Figure 2 est une représentation schématique d'un autre exemple de dispositif de mesure pouvant être mis en œuvre dans le cadre de la présente invention ;
- la Figure 3 est une représentation schématique d'un exemple de réalisation non limitatif d'un procédé de mesure selon la présente invention ; et
- la Figure 4 est une représentation schématique d'un exemple d'un élément optique à mesurer, notamment en mettant en œuvre le procédé de mesure de l'invention.

Il est bien entendu que les modes de réalisation qui seront décrits dans la suite ne sont nullement limitatifs. On peut notamment considérer d'autres modes de réalisation dès lors que ces derniers restent dans le champ de protection défini par les revendications.

En particulier toutes les variantes et tous les modes de réalisation décrits sont combinables entre eux si rien ne s'oppose à cette combinaison sur le plan technique et si le résultat de cette combinaison reste dans le champ de protection défini par les revendications.

Sur les figures, les éléments communs à plusieurs figures peuvent conserver la même référence.

Le procédé de mesure selon la présente invention peut mettre en œuvre différentes techniques d'interférométrie. Il peut notamment utiliser un dispositif de mesure basé sur un interféromètre à faible cohérence fonctionnant en mode point, ou basé sur un interféromètre à faible cohérence plein champ.

Un dispositif selon la présente invention, pour mesurer une information géométrique d'une interface à mesurer d'un élément optique comprenant au moins deux interfaces, comprend un interféromètre avec au moins une source de lumière à faible cohérence et au moins un capteur optique. La ou les sources sont configurées pour diriger au moins un faisceau de mesure vers l'élément optique de sorte à traverser les interfaces. L'interféromètre est configuré pour produire un signal d'interférence provenant de l'interférence entre le faisceau de mesure réfléchi par l'interface à mesurer et un faisceau de référence. Le signal d'interférence est détecté par le capteur. Ce signal d'interférence contient une mesure de forme optique de l'interface de laquelle le faisceau de mesure est réfléchi, et donc des informations géométriques de celle-ci. Un ou plusieurs signaux d'interférence sont ainsi acquis selon un champ de vue sur l'interface.

Le dispositif selon l'invention comprend également des moyens de positionnement pour positionner relativement une zone de cohérence de l'interféromètre au niveau de l'interface à mesurer de l'objet.

Le dispositif comprend en outre des moyens numériques de traitement, configurés pour produire, à partir du signal d'interférence mesuré, une information géométrique de l'interface à mesurer selon un champ de vue. Ces moyens de traitement comprennent au moins un ordinateur, une unité centrale ou de calcul, un microprocesseur, et/ou des moyens logiciels adaptés.

Le dispositif selon l'invention peut également comprendre des moyens de déplacement pour déplacer l'élément optique selon un axe Z relativement par rapport au dispositif de mesure, afin d'obtenir un déplacement du point de focalisation par rapport aux interfaces de l'élément optique.

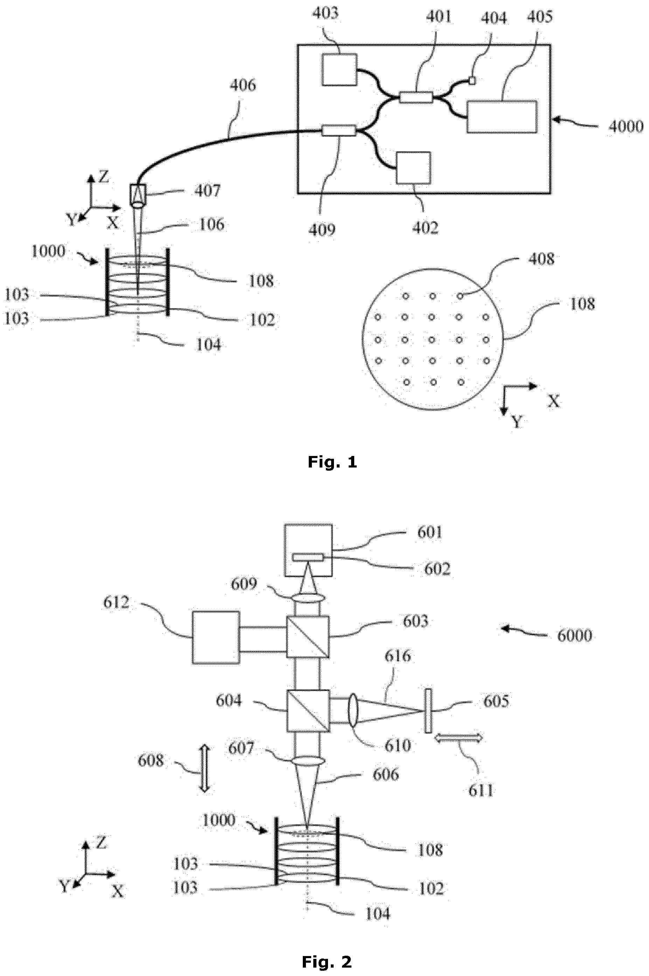

La Figure 1 est représentation schématique d'un exemple de réalisation non limitatif d'un dispositif interférométrique pouvant être mis en œuvre dans le cadre de la présente invention. Le dispositif peut notamment être utilisé pour mettre en œuvre le procédé de mesure de l'invention.

L'interféromètre 4000, représenté sur la Figure 1, est un interféromètre à faible cohérence dans le domaine temporel.

L'interféromètre 4000 peut fonctionner, par exemple, dans l'infrarouge. Pour mesurer des assemblages optiques avec des traitements antireflets, il peut être avantageux de choisir pour l'interféromètre une longueur d'onde de travail différente de celles pour lesquels les traitements antireflets sont optimisés, auquel cas ils peuvent présenter une réflectivité élevée. Ainsi, un interféromètre fonctionnant dans l'infrarouge convient bien pour faire des mesures d'assemblages optiques destinés à être utilisés dans des longueurs d'ondes visibles.

L'interféromètre 4000 fonctionne en mode point, c'est-à-dire qu'il ne permet d'acquérir qu'un seul point 408 à la fois d'un champ de vue 108 des surfaces ou des interfaces de l'élément optique 1000 à mesurer.

Dans le mode de réalisation illustré sur la Figure 1, l'interféromètre 4000 comprend un double interféromètre de Michelson à base de fibres optiques monomodes. Le double interféromètre est illuminé par une source de lumière fibrée 402. La source de lumière 402 peut être une diode superluminescente (en Anglais : *Super Luminescente Diode,* SLD) dont la longueur d'onde centrale est, par exemple, de l'ordre de 1300 nm à 1350 nm et la largeur spectrale de l'ordre de 60 nm. Le choix de cette longueur d'onde correspond notamment à des critères de disponibilité des composants.

La lumière issue de la source 402 est dirigée au travers d'un coupleur à fibres 409 et d'une fibre 406 vers un collimateur 407, pour constituer le faisceau de mesure ponctuel 106. Une partie du faisceau est réfléchie dans la fibre 406 au niveau du collimateur 407, par exemple à l'interface silice-air ou verre-air constituant l'extrémité de la fibre, pour constituer une onde de référence.

Les rétroréflexions issues, par exemple, des interfaces 103 de l'élément optique 1000, sont couplées dans la fibre 406 et dirigées avec l'onde de référence vers un interféromètre de décodage construit autour d'un coupleur à fibres 401. Cet interféromètre de décodage a une fonction de corrélateur optique dont les deux bras sont, respectivement, une référence fixe 404 et une ligne à retard temporelle 405. Les signaux réfléchis au niveau de la référence 404 et de la ligne à retard 405 sont combinés, au travers du coupleur 401, sur un détecteur 403 qui est une photodiode. La fonction de la ligne à retard 405 est d'introduire un retard optique entre les ondes incidentes et réfléchies, variable au cours du temps d'une manière connue, obtenu par exemple par le déplacement d'un miroir.

La longueur des bras de l'interféromètre de décodage est ajustée de telle sorte à permettre de reproduire avec la ligne à retard 405 les différences de trajets optiques entre l'onde de référence réfléchie au niveau du collimateur 407 et les rétroréflexions issues des interfaces de l'élément optique 1000, auquel cas on obtient au niveau du détecteur 403 un interférogramme dont la forme et la largeur dépendent des caractéristiques spectrales de la source 402, et en particulier de sa longueur de cohérence optique.

Ainsi, la zone de mesure de l'interféromètre 4000, relativement au collimateur 407 ou à l'interface du collimateur qui génère l'onde de référence, est déterminée par la différence de longueur optique entre les bras de l'interféromètre de décodage, et par la course maximale de la ligne à retard 405. Cette zone de mesure correspond à une zone de cohérence dans laquelle l'interface à mesurer 103 doit se trouver.

Pour obtenir des informations géométriques, telles que des formes optiques, des interfaces 103, le champ de vue 108 peut être balayé selon une pluralité de points de mesure 408 à différentes positions (X, Y). Pour cela, le dispositif de mesure peut comprendre des moyens de positionnement ou de déplacement, pour déplacer soit l'élément optique 1000, soit le collimateur 407. Par exemple, l'élément optique 1000 peut être posé sur une table de translation apte à se déplacer selon les directions X et Y. Il est également possible que l'élément à mesurer 1000 soit déplacé selon l'un des axes X ou Y et ensuite tourné autour de l'axe Z. D'autres variantes de déplacement relatif de l'élément optique par rapport au collimateur sont bien entendu réalisables.

Les moyens numériques de traitement peuvent fournir les coordonnées précises des positions X, Y, ou équivalents, soit par lecture d'un capteur de déplacement, soit à partir de l'action appliquée à un moteur de déplacement d'une table de déplacement par exemple, soit à partir de tout autre moyen approprié.

Le champ de vue 108 atteignable pour les différentes interfaces 103 dépend notamment de l'ouverture numérique du collimateur 407 et des courbures des surfaces. En effet, pour obtenir une mesure, il faut que la réflexion spéculaire du faisceau de mesure 106 sur l'interface 103 soit recouplée dans le collimateur 407 et l'interféromètre 4000.

La Figure 2 est une représentation schématique d'un autre exemple de dispositif interférométrique pouvant être mis en œuvre dans le cadre de la présente invention.

L'interféromètre 6000, représenté sur la Figure 2, est un interféromètre à faible cohérence plein champ.

Le dispositif 6000 est basé sur un interféromètre de Michelson ou de Linnik formé par un élément séparateur 604, sous la forme d'un cube ou d'une lame séparatrice, avec un bras de mesure qui dirige un faisceau de mesure 606 vers l'élément optique à mesurer 1000, et un bras de référence avec un miroir 605 pour former un faisceau de référence 616.

L'interféromètre 6000 est illuminé par une source 612 à faible cohérence par l'intermédiaire d'un élément séparateur d'éclairage 603 sous la forme d'un cube ou d'une lame séparatrice. La source 612 peut comprendre, par exemple, une diode superluminescente (SLD), une diode, une source de lumière thermique (lampe halogène, etc.) ou une source supercontinuum. La source 612 peut également comprendre un dispositif de filtrage, par exemple avec un réseau et une fente, ou des filtres interférentiels, pour ajuster la longueur de cohérence à quelques dizaines ou quelques centaines de microns. La source 612 peut être agencée pour émettre dans des longueurs d'ondes visibles ou proche infrarouge, autour d'une ou plusieurs longueurs d'ondes.

Bien entendu, les éléments séparateurs 603, 604 peuvent être non polarisants, ou polarisants et associés à des lames quart-d'ondes pour faire des coupleurs sans pertes.

Les faisceaux de mesure 606 et de référence 616, réfléchis respectivement dans les deux bras de l'interféromètre, sont dirigés par l'intermédiaire de la lame séparatrice d'éclairage 603 vers une caméra 601 avec un capteur 602 comprenant une matrice de détection, par exemple de type CMOS ou CCD.

Lorsque la différence de trajets optiques entre les faisceaux de mesure 606 et de référence 616 est inférieure à la longueur de cohérence de la source 612, on obtient des interférences sur le détecteur 602.

Le dispositif 6000, tel que représenté sur la Figure 2, comprend également une lentille ou un objectif de focalisation 607, et une lentille de tube 609, agencées de sorte à définir un plan objet conjugué d'un plan image formé sur le capteur 602. Le bras de référence comprend en outre un objectif 610 qui définit également, avec la lentille de tube 609, un plan objet de référence conjugué du plan image du capteur 602.

Le dispositif 6000 est un dispositif imageur plein champ, qui permet d'imager des interfaces 103 de l'élément optique 1000 selon un champ de vue 108 qui est déterminé par le champ de vue du système d'imagerie et par son ouverture numérique au niveau de l'objectif de focalisation 607. En effet, pour obtenir une mesure, il faut que la réflexion spéculaire du faisceau de mesure 606 sur les interfaces 103 soit recouplée dans le système d'imagerie.

De manière habituelle, le dispositif 6000 comprend des éléments optiques pour focaliser le faisceau d'illumination dans le plan focal arrière de l'objectif de focalisation 607 et de l'objectif 610 du bras de référence. Les faisceaux d'illumination ne sont pas représentés sur la figure pour des raisons de clarté.

Le dispositif 6000 comprend également un premier moyen de positionnement ou de déplacement 611 pour faire varier la longueur du bras de référence, par exemple sous la forme d'une platine de translation 611 déplaçant le miroir de référence 605. L'objectif 610 du bras de référence peut également être ajustable pour maintenir le miroir de référence 605 dans un plan objet conjugué du plan image formé par le capteur 602.

Le dispositif 6000 comprend également un deuxième moyen de déplacement 608 dont la fonction est de déplacer le plan objet conjugué du plan image formé par le capteur 602, de sorte par exemple à imager séquentiellement les interfaces 103 successives sur le capteur 602. Ce moyen de déplacement 608 peut comprendre un système pour déplacer l'objectif de focalisation 607 ou des lentilles de cet objectif, par exemple avec un dispositif de translation linéaire ou hélicoïdal. Alternativement ou en plus, ce moyen de déplacement 608 peut comprendre un dispositif ou une platine de translation pour déplacer le dispositif 6000 relativement à l'élément optique 1000, ou inversement.

Avec les dispositifs interférométriques 4000 ou 6000, lorsqu'une surface ou une interface 103 d'un élément optique apparaît dans la zone de cohérence, on obtient sur le capteur une structure d'interférences résultant des interférences entre faisceaux de mesure et de référence pour le champ de vue 108. Des informations géométriques des interfaces peuvent être déduites de ces structures d'interférences.

Le dispositif selon l'invention, mettant par exemple en œuvre un interféromètre selon l'un des modes de réalisation représentés sur les Figures 1 et 2, peut être utilisé pour mettre en œuvre les étapes du procédé selon l'invention qui seront décrites par la suite.

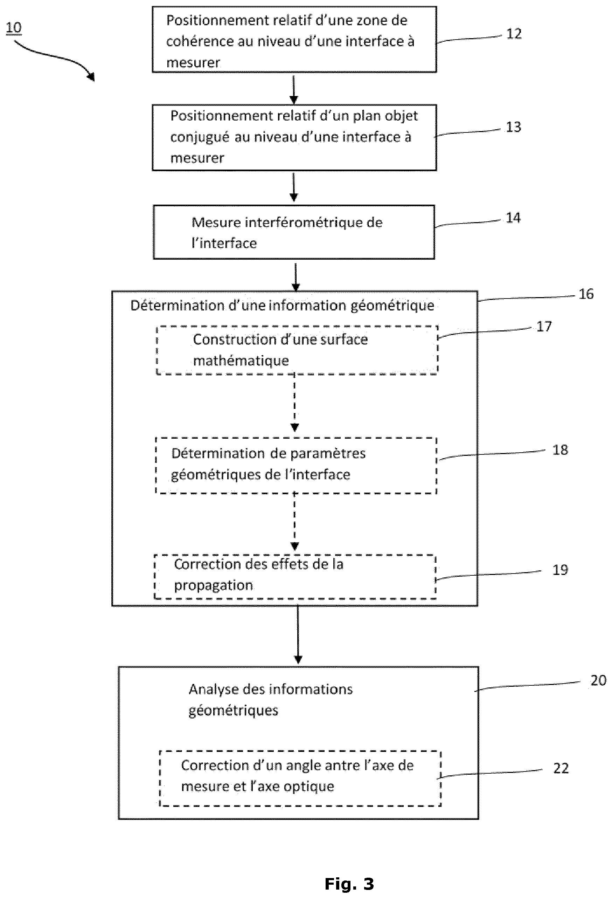

La Figure 3 est une représentation schématique d'un exemple de réalisation non limitatif d'un procédé de mesure selon l'invention.

Le procédé 10, représenté sur la Figure 3, comprend une étape 12 de positionnement relatif d'une zone de cohérence au niveau d'une interface à mesurer 103 d'un élément optique 1000.

Si la profondeur de champ de l'objectif de focalisation 407, 607 est suffisante pour obtenir un signal de toutes les interfaces 103 de l'élément à mesurer, en modifiant la longueur optique du bras de référence, par exemple en déplaçant le miroir de référence 605 ou en variant la longueur de la ligne à retard 405, on déplace la zone de cohérence dans laquelle des interférences entre faisceaux de mesure 106, 606 et de référence 616 peuvent se former sur le détecteur 403, 602. Lorsque cette zone de cohérence traverse une interface 103, on peut acquérir des signaux d'interférences en tous points du champ de vue mesurable 108.

La zone de cohérence est positionnée le long de l'axe de mesure, correspondant à la direction du faisceau de mesure, et en général ne couvre pas toute l'interface à mesurer mais uniquement une zone partielle. La zone de cohérence ne doit pas être obligatoirement positionnée au niveau de l'axe optique de l'élément optique. Elle peut notamment être positionnée de façon à ce que le faisceau de mesure réfléchi ait un angle proche de l'angle d'incidence du faisceau de mesure.

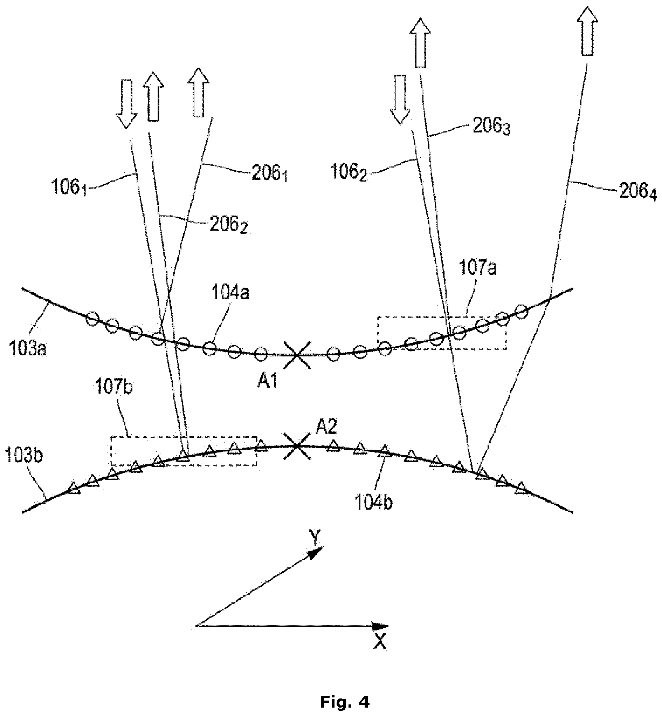

Un exemple de positionnement de zones de cohérence est illustré sur la Figure 4. Deux interfaces à mesurer 103a, 103b successives d'un élément optique sont montrées, ainsi que deux faisceaux de mesure 106₁, 106₂ et deux faisceaux de mesure réfléchis 206₁, 206₂, 206₃, 206₄ pour chacune des deux interfaces 103a, 103b. Les faisceaux représentés délimitent la zone mesurée sur chaque interface.

Les zones de cohérence pour les deux interfaces 103a, 103b sont indiquées par des rectangles 107a, 107b, respectivement. Dans l'exemple de la Figure 4, la zone de cohérence 107a pour la première interface 103a est positionnée de manière différente que la zone de cohérence 107b pour la deuxième interface 107b. Dans les zones 107a, 107b ainsi positionnées, les directions des faisceaux de mesure réfléchis restent proche de la direction du faisceau de mesure incident. Les dimensions des zones de cohérence sont notamment définies par la lumière réfléchie maintenue dans l'angle d'acceptance du système de détection. Il est à noter que les zones de cohérence ne recouvrent donc pas nécessairement les apex A1, A2 respectifs (indiqués par des croix sur la Figure 4) des interfaces 103a, 103b mesurées. Ces apex A1, A2 peuvent alors être situés l'un par rapport à l'autre à des distances en deçà d'une distance minimale mesurable par dispositif de mesure.

Selon le mode de réalisation représenté sur la Figure 3, le procédé 10 comprend également une étape 13 de positionnement relatif d'un plan objet conjugué du plan image sur le capteur 602 au niveau de l'interface à mesurer 103.

En effet, il est préférable de positionner l'interface 103 à mesurer dans un plan objet conjugué du plan image situé sur le capteur 602 ou dans le collimateur 407 à l'extrémité de la fibre optique 406, en variant la distance de focalisation du faisceau de mesure de sorte à ce que le faisceau de mesure soit focalisé sur l'interface considérée. Cela permet d'optimiser la puissance recouplée dans le système d'imagerie et de mesurer l'interface selon un champ de vue 108 avec des pentes locales plus importantes, grâce à une meilleure exploitation de l'ouverture numérique du collimateur 407 ou de l'objectif de focalisation 607, 707.

Le déplacement de la zone de cohérence effectué, par exemple, en déplaçant le miroir de référence 605.

Le déplacement du plan objet, pour le positionner sur les interfaces successives, est effectué, par exemple, en variant la distance Z entre le collimateur 407 ou l'objectif de focalisation 607 et l'élément optique à mesurer 1000, et/ou en variant la distance de focalisation du collimateur 407, de l'objectif de focalisation 607 ou d'autres éléments optiques insérés dans le faisceau de mesure. La détection de la distance de focalisation optimale peut être effectuée en se basant, par exemple, sur un critère de maximum de puissance recouplée, ou de maximum de contraste d'image ou de franges d'interférences.

Ces deux déplacements, de la zone de cohérence et du plan objet, doivent donc être effectués de manière coordonnée, le cas échéant, de sorte à superposer la zone de cohérence au plan objet considéré.

Lors d'une étape 14 du procédé 10, l'interface de l'élément à mesurer, qui a été positionnée dans la zone de cohérence et, éventuellement, dans le plan objet lors des précédentes étapes 12, 13 comme détaillé ci-dessus, est mesurée au moyen du faisceau de mesure 106, 606.

Lors de ces mesures interférométriques, on obtient un ensemble de pics correspondant à des enveloppes d'interférogrammes obtenus pour l'ensemble des interfaces 103 mesurées. Les pics sont représentatifs de réflexions du faisceau de mesure sur les interfaces. Les grandeurs obtenues à partir des interférogrammes sont des distances optiques, dans la direction Z, et comptées par rapport à une référence de position de l'interféromètre localisée par exemple par construction au niveau du collimateur 407 de l'interféromètre 4000 de la Figure 1, des interfaces 103 des différents composants ou lentilles 102, pour une position (X, Y) dans le champ de vue 108. Ceci permet de connaitre la position relative de chaque interface mesurée. La référence de position peut également être constituée par un élément de référence ajouté à l'interféromètre, tel qu'une lame plane de référence, pour fournir une ou deux interface(s) supplémentaire(s).

Les mesures sont répétées pour des points (X, Y) du champ de vue pour obtenir une structure d'interférences dans le champ de vue, et pour toutes les interfaces 103 de l'élément optique.

Lorsque les mesures sont effectuées avec un interféromètre plein champ, tels qu'illustrés sur la Figure 2, on obtient directement sur le détecteur une structure d'interférences résultant des interférences entre faisceaux de mesure et de référence pour tout le champ de vue 108.

Lors d'une phase de traitement 16 du procédé 10, l'ensemble des signaux d'interférence pour une interface à mesurer sont traités numériquement afin d'en déduire une information géométrique de cette interface.

Lors d'une première étape 17 de traitement, une interface mathématique est construite à partir d'au moins un sous-ensemble de signaux d'interférence acquis lors de l'étape 14 de mesure.

Pour cela, pour chaque signal d'interférence, une mesure caractéristique désignant la position brute pour chaque interface est produite.

Selon un premier mode de réalisation, cette mesure caractéristique est la position relative de l'interface mesurée. La position relative peut être indiquée, par exemple, par les positions des moteurs de positionnement ou de déplacement relatif de l'interface par rapport à l'objectif de focalisation ou au collimateur, dans les trois directions x, y, z, comme décrit ci-dessus.

Les positions brutes mesurées sont notées Z(x, y, z, i), où x, y, z désignent la position des moteurs de déplacement ou de positionnement, i indique l'interface, variant de 1 à n. Les indices 0 et -1 peuvent être prévus pour un élément de référence dans l'interféromètre, tel qu'une lame plane comme indiqué ci-dessus.

Pour une détection en mode point, l'interface à mesurer est déplacé relativement par rapport au faisceau de mesure selon les axes X, Y, selon une série xₘ(d), yₘ(d), zₘ(d) de D déplacements, où d est un indice de déplacement variant de 1 à D, et m indique « mouvement ». Il est alors possible de formuler une table [Math1] ${Z}_{m} \left(d, i\right) = Z \left({x}_{m}\left(d\right),{y}_{m}\left(d\right),{z}_{m}\left(d\right),i\right)$ contenant toutes les mesures de positions des interfaces mesurées.

Pour une détection de plein champ, la table Z(d,i) peut être obtenue directement à partir de la position des pixels du capteur : [Math2] ${Z}_{s} \left(d, i\right) = Z \left({x}_{s}\left(d\right),{y}_{s}\left(d\right),{z}_{s}\left(d\right),i\right) ,$ où s indique « *screen ».*

Selon un deuxième mode de réalisation, la mesure caractéristique est l'amplitude des pics correspondant à des enveloppes d'interférogrammes obtenus pour l'ensemble des interfaces mesurées.

Pour une détection en mode point, les amplitudes A peuvent s'écrire [Math3] ${A}_{m} \left(d, i\right) = A \left({x}_{m}\left(d\right),{y}_{m}\left(d\right),{z}_{m}\left(d\right),i\right)$ selon la nomenclature donnée ci-dessus, les coordonnées Zₘ(d,i) étant directement remplaçables par les amplitudes Aₘ(d,i).

Pour une détection de plein champ, on obtient directement sur le détecteur une structure d'interférences résultant des interférences entre faisceaux de mesure et de référence pour tout le champ de vue 108. Pour obtenir des amplitudes Aₛ(d,i) et/ou des valeurs de phase qui permettent d'obtenir des informations de position (ou topographie), cette structure d'interférences doit être traitée numériquement. Des méthodes connues peuvent être mises en œuvre, telles que des algorithmes basés sur l'interférométrie par décalage de phase *(« phase stepping interferometry »* en anglais, PSI) ou par balayage vertical (« *vertical scan interferometry »* en anglais, VSI), ou par holographie numérique (« digital holography microscopy » en anglais, DHM).

Les tables de coordonnées Zₘ(d,i) ou Zₛ(d,i) et les tables d'amplitudes Aₘ(d,i) ou Aₛ(d,i) peuvent être considérées comme des représentations mathématiques des interfaces mesurées.

Pour la suite de la description du procédé 10, seul l'interface mathématique Zₘ(d,i) sera considérée par souci de clarté. Bien entendu, les étapes décrites peuvent également être réalisées en utilisant les autres expressions, en fonction du mode de détection employé et du type de mesures caractéristiques choisies.

Lors d'une deuxième étape 18 de traitement, une information géométrique est déterminée à partir de la représentation mathématique et d'une forme attendue d'une section de l'interface, pour chaque interface.

Lors de cette étape 18 de détermination, il s'agit de reconnaitre une forme plausible, ou attendue, de l'interface à mesurer à partir de l'interface mathématique Zₘ(d,i). Pour ce faire, l'interface mathématique peut notamment être comparée à une surface typique, telle qu'une surface sphérique. Afin de trouver les paramètres caractéristiques de l'équation décrivant la surface typique, une méthode des moindres carrés peut être utilisée. D'autres méthodes sont bien entendu envisageables, telles que des méthodes de recherche de minimisation d'erreurs entre un modèle connu et une série de mesures.

La Figure 4 montre des formes attendues 104a, 104b (indiquées par des cercles et des triangles, respectivement) pour les deux interfaces mesurées 103a, 103b, respectivement, d'un élément optique.

A titre d'exemple, l'étape 18 de détermination d'une information géométrique d'une interface est décrite pour une forme attendue sphérique, pour la recherche de l'apex de l'interface.

On suppose que l'interface à reconnaitre est essentiellement une portion de sphère. Pour chaque interface mesurée, une équation d'une portion de sphère est extraite de la table Zₘ(d, i) à i fixé, d balayant les positions retenues. Cette extraction est réalisée, par exemple, par une méthode des moindres carrés.

Exprimée globalement pour l'ensemble des points de la sphère ayant un centre (x_{c}, y_{c}, z_{c}), l'équation d'une sphère de rayon R est de la forme [Math4] ${R}^{2} = {\left(x-{x}_{c}\right)}^{2} + {\left(y-{y}_{c}\right)}^{2} + {\left(z-{z}_{c}\right)}^{2} .$

Exprimé localement autour d'un voisinage d'un apex avec les coordonnées (x_{A}, y_{A}, z_{A}), l'équation d'une sphère peut aussi s'écrire par approximation : [Math5] ${R}_{model} \left(x, y\right) \approx \frac{1}{2 R} \left({\left(x-{x}_{A}\right)}^{2}+{\left(y-{y}_{A}\right)}^{2}\right) + {z}_{A} .$

Sous cette forme, une méthode des moindres carrés peut directement fournir les valeurs de x_{A}, y_{A}, z_{A}, et le facteur 1/(2R) modélise la courbure apparente de la surface. On peut expliciter l'erreur minimale de distance entre Zm(d,i) et Z_{model}(x(d),y(d)) par [Math6] $ε \left(i\right) = {\sum }_{d} \left[{\left({Z}_{m}\left(d, i\right)-{Z}_{model}\left(x\left(d\right),y\left(d\right)\right)\right)}^{2}\right] .$

A ce stade, une table de points [Math7] $A \left(i\right) = \left({x}_{A}\left(i\right),{y}_{A}\left(i\right),{z}_{A}\left(i\right)\right)$ est obtenue, représentant les positions brutes de chaque apex.

Ensuite, les distances entre les projections des apex sur l'axe Z sont calculées : [Math8] ${E}_{z} \left(i\right) = {z}_{A} \left(i\right) - {z}_{A} \left(i-1\right) ,$ où i varie entre 2 et n.

Ces distances sont dites optiques, car elles représentent des temps de retard optique du faisceau réfléchi. Il convient donc, pour les indices i associés à un matériau autre que de l'air, de diviser ces distances par les indices de réfraction N(i), afin d'obtenir des distances géométriques.

Lorsque les mesures ont été effectuées en mode plein champ, un facteur de grossissement est appliqué pour exprimer les distances entre pixels du capteur en distances dans le plan objet de l'objectif. Ce facteur peut également prendre en compte la distance à laquelle chaque interface est détectée.

La phase de traitement 16 fournit ainsi un ensemble d'informations géométriques dites « semi-brutes » sur les interfaces mesurées :
- une liste des coordonnées x_{A}(i), y_{A}(i) dans le référentiel du système de mesure, pour i variant de 1 à n, ces coordonnées pouvant comprendre, pour chaque interface, les positions de points caractéristiques tels que les apex, sommets, vallées, etc.,
- une liste des positions relatives par comparaison des coordonnées des points caractéristiques appartenant à différentes interfaces,
- une liste des distances E_{z}(i) entre apex.

Bien entendu, d'autres formes attendues qu'une forme sphérique sont possibles. Par exemple, pour des interfaces appartenant à une lentille fortement asphérique mesurée à des positions où la lentille a localement la forme d'un bourrelet, une partie de cercle peut ne pas être adaptée. Aussi, une partie de sphère peut être complétée d'un terme de conicité usuellement utilisé en optique pour corriger les aberrations apparaissant aux grands angles d'ouverture de lentilles.

Selon un mode de réalisation non limitatif et en référence à la Figure 3, la phase de traitement 16 du procédé 10 selon l'invention comprend une étape 19 de correction pour tenir compte des milieux traversés par le faisceau de mesure. Cette correction peut être appliquée sur les distances et positions optiques ou géométriques obtenues à l'étape 17 de traitement.

Selon un premier exemple, cette étape 19 de correction est réalisée par l'utilisation de modèles de propagation des ondes électromagnétiques au travers des différents matériaux et interfaces jusqu'à l'interface i considérée, incluant tous les composants optiques de l'interféromètre et les interfaces de l'élément optique à mesurer 1000 traversées.

Selon un deuxième exemple, l'étape 19 de correction est réalisée en calculant une fonction d'étalement du point (« *Point Spread Function »* en Anglais, PSF) ou une fonction de transfert optique (dans le domaine de Fourier) du système optique traversé par le faisceau de mesure jusqu'à l'interface i considérée, incluant tous les composants optiques de l'interféromètre et les interfaces de l'élément optique à mesurer traversées.

L'étape 19 de correction peut être également réalisée en utilisant des informations de conception sur l'élément optique, lorsqu'elles sont disponibles. On peut par exemple utiliser des informations de conception, telles que les formes ou les courbures nominales d'interfaces, pour corriger l'effet des interfaces traversées par le faisceau de mesure en mettant en œuvre par exemple l'un des modèles décrits précédemment. On peut ainsi par exemple valider la forme d'une interface dans un champ de vue avec une mesure, puis en utiliser la forme nominale complète (en particulier pour des formes asphériques ou *« freeform »)* pour corriger les mesures des interfaces suivantes.

L'étape 19 de correction est réalisée séquentiellement, dans l'ordre des interfaces traversées de l'élément optique. Ainsi, pour chaque interface considérée, on dispose des positions et/ou distances optiques et/ou géométriques corrigées des interfaces précédentes traversées par le faisceau de mesure.

Avantageusement, l'étape de correction 19 peut être mise en œuvre préalablement aux étapes 17, 18 de traitement décrites ci-dessus, afin que ces dernières puissent être réalisées sur des points de mesure corrigés des effets de propagation optique.

Selon le mode de réalisation représenté sur la Figure 3, le procédé 10 comprend en outre une phase d'analyse 20 des informations géométriques obtenues à la phase de traitement 16.

Selon un exemple, des décentrements peuvent être déterminés pendant la phase d'analyse 20. Les coordonnées des apex des différentes interfaces permettent de connaître les valeurs de décentrement d'une interface par rapport à l'autre.

Selon un autre exemple, des distances E_{z}(i) entre apex indiquent les épaisseurs de lentilles et les distances entre ces dernières d'un élément optique.

Selon un mode de réalisation avantageux, la phase d'analyse 20 du procédé selon l'invention comprend une étape 22 de correction d'angle d'un axe optique de l'élément optique par rapport à un axe de mesure, avant une répétition des étapes 17, 18 de traitement et éventuellement de l'étape 19 de correction.

Lors de la phase 16 de traitement comme décrit ci-dessus, les coordonnées sont calculées dans un système défini par l'axe de mesure Z et les axes X et Y du dispositif de mesure.

Pour réaliser cette étape 22, un nouveau système de référence rattaché à l'élément optique peut être défini. Il est par exemple possible de définir un plan de référence à partir :
- de zones caractéristiques du barillet de l'élément optique, ou
- de zones caractéristiques des composants de l'élément optique telles que des zones périphériques plates de la lentille mesurée, ou
- de points de référence associés à d'autres interfaces mesurées de l'élément optique.
Ces points de référence peuvent être utilisés pour définir un nouveau système de coordonnées.

Dans ce système, un axe central peut être calculé comme passant, par exemple, par le barycentre de trois points de référence. Ces trois points de référence tels que, par exemple, des points périphériques caractéristiques d'une lentille et répartis à la même distance du centre d'une interface de la lentille. Ces trois points définissent un plan P, dont la normale caractérise alors l'axe central de référence Γ de l'élément optique.

Dans une lentille asphérique présentant un bourrelet à symétrie de révolution, ces points peuvent être trois sommets du bourrelet.

Pour chaque interface i, les coordonnées géométriques corrigés x_{Ap}(i), y_{Ap}(i), z_{Ap}(i) définissent un point M(i), dont la distance est calculée vectoriellement par un vecteur V(i) à la droite Γ. En choisissant deux nouveaux axes XI, YI comme projection des axes X, Y sur le plan P par la direction de la droite Γ, les coordonnées de V(i) dans XI, YI fournissent les coordonnées dx_{AI}(i), dy_{AI}(i) relatives à cet axe central. La table de coordonnées dx_{AI}(i), dy_{AI}(i) fournit alors des valeurs de centrage des interfaces par rapport à l'axe central défini ci-dessus. De même, les épaisseurs E(i) peuvent être recalculées comme distances El(i), c'est-à-dire des distances entre les points de projection des sommets de chaque interface sur Γ.

Il convient de noter que les apex ainsi calculés peuvent être légèrement différents de ceux obtenus sans correction.

Le vecteur normal V(i) peut ensuite être comparé angulairement à l'axe de mesure. Des informations de décalage angulaire des interfaces par rapport à la référence d'axe définie (par exemple l'axe de mesure) peuvent ainsi être déduites.

Ainsi, grâce au procédé selon l'invention, des composants optiques erronés ou hors spécifications dans un élément optique peuvent être identifiés pendant la phase d'analyse 20. Cette identification peut être réalisée, par exemple, en comparant des mesures de distances, d'épaisseurs ou de formes des surfaces avec des grandeurs de référence issues de la conception de l'élément optique. Des grandeurs non conformes, telles que des épaisseurs et/ou des formes de surface erronées, ou des composants mal positionnés le long de l'axe optique, ayant un espace entre les composants non conformes, peuvent ainsi être détectés.

Bien sûr, l'invention n'est pas limitée aux exemples qui viennent d'être décrits et de nombreux aménagements peuvent être apportés à ces exemples sans sortir du cadre de l'invention.

## Revendications

1. Procédé de mesure (10), pour mesurer une information géométrique d'une interface (103) à mesurer d'un élément optique (1000) comprenant aux moins deux interfaces, le procédé (10) étant mis en œuvre par un dispositif de mesure comprenant des moyens de mesure interférométriques (4000, 6000) avec au moins un capteur optique (403, 602) et une source (402, 612) à faible cohérence configurés pour diriger un faisceau de mesure (106, 606) vers l'élément optique (1000) de sorte à traverser au moins une des au moins deux interfaces et à être réfléchi par l'interface (103) à mesurer et générer un faisceau de mesure réfléchi, et pour détecter sélectivement un signal d'interférence résultant d'interférences entre le faisceau de mesure réfléchi et un faisceau de référence (616), le dispositif comprenant en outre des moyens de positionnement (608, 611) et des moyens numériques de traitement, tel que ledit procédé (10) comprend les étapes suivantes :
- positionnement relatif (12), par les moyens de positionnement (608, 611), d'une zone de cohérence des moyens de mesure interférométriques au niveau d'une interface (103) à mesurer ;
- mesure (14) de l'interface (103) par les moyens de mesure interférométriques, de sorte à produire une pluralité de signaux d'interférence correspondant à une pluralité de points de mesure sur l'interface (103) ;
et **caractérisé en ce que** le procédé comprend les étapes suivantes :
- traitement (16) des signaux d'interférence par les moyens numériques de traitement, le traitement comprenant les étapes suivantes :
∘ construction (17) d'une interface mathématique à partir d'au moins un sous-ensemble de signaux d'interférence pour l'interface (103),
∘ détermination (18), à partir de l'interface mathématique et d'une forme attendue (104a, 104b) d'au moins une première section de l'interface (103), d'une information géométrique de l'interface à mesurer, l'étape (18) de détermination étant réalisée par les étapes suivantes :
• déduction de paramètres d'un modèle ou d'une formulation analytique de la première section de l'interface (103) ;
• modélisation de la forme d'une seconde section de l'interface à mesurer (103), à partir des paramètres déduits, la seconde section de l'interface étant égale à ou différente de la première section de l'interface.

2. Procédé (10) selon la revendication 1, **caractérisé en ce que** la première section de l'interface comprend au moins un élément de surface.

3. Procédé (10) selon la revendication 1 ou 2, **caractérisé en ce que** l'étape (17) de la construction de l'interface mathématique est réalisée par la production d'une mesure comportant une information de position relative de l'interface et/ou une mesure d'amplitude du signal d'interférence, pour chaque signal d'interférence du sous-ensemble de signaux d'interférence.

4. Procédé (10) selon l'une quelconque des revendications précédentes, **caractérisé en ce que** la forme attendue (104a, 104b) de l'interface comprend une fonction d'interpolation pour interpoler les points de mesure.

5. Procédé (10) selon l'une quelconque des revendications 1 à 3, **caractérisé en ce que** la forme attendue (104a, 104b) de l'interface comprend un profil théorique d'au moins la première section de l'interface.

6. Procédé (10) selon l'une quelconque des revendications précédentes, **caractérisé en ce qu'**il comprend en outre une étape (20) d'analyse de l'interface en exploitant l'information géométrique, de sorte à produire au moins l'une des informations suivantes :
- un décentrement et/ou une inclinaison de l'interface ;
- une position relative, un décentrement et/ou une inclinaison d'une interface relativement à une autre ;
- une distance entre points caractéristiques de deux interfaces.

7. Procédé (10) selon l'une quelconque des revendications précédentes, **caractérisée en ce qu'**au moins l'étape (12) de positionnement de la zone de cohérence et l'étape (14) de mesure sont mises en œuvre de manière séquentielle pour la mesure de l'information géométrique de différentes interfaces à mesurer.

8. Procédé (10) selon l'une quelconque des revendications précédentes, **caractérisé en ce que** l'étape (16) de traitement des signaux d'interférence comprend en outre une étape (19) de correction prenant en compte une information géométrique des interfaces traversées par le faisceau de mesure, pour obtenir une information géométrique de l'interface (103) à mesurer.

9. Procédé (10) selon l'une quelconque des revendications précédentes, **caractérisé en ce qu'**il comprend en outre une étape (22) de correction d'angle d'un axe optique de l'élément optique par rapport à un axe de mesure.

10. Procédé (10) selon l'une quelconque des revendications précédentes, **caractérisé en ce que** l'étape (16) de traitement des signaux d'interférence met en œuvre un procédé de calcul par holographie numérique.

11. Procédé (10) selon l'une quelconque des revendications précédentes, **caractérisé en ce qu'**il est mis en œuvre pour mesurer les formes et/ou les positions des interfaces d'un élément optique sous la forme d'un assemblage optique avec des lentilles, tel qu'un objectif de smartphone, les interfaces comprenant les surfaces des lentilles.

12. Dispositif de mesure, pour mesurer une information géométrique d'une interface (103) à mesurer d'un élément optique (1000) comprenant au moins deux interfaces, le dispositif comprenant :
- des moyens de mesure interférométriques (4000, 6000) comprenant au moins une source de lumière (402, 612) à faible cohérence et au moins un capteur optique (403, 602), configurés pour :
∘ former au moins un faisceau de mesure (106, 606) et au moins un faisceau de référence (616),
∘ diriger le faisceau de mesure (106, 606) vers l'élément optique de sorte à traverser au moins une des au moins deux interfaces et à être réfléchi par l'interface (103) à mesurer et générer un faisceau de mesure réfléchi,
∘ détecter sélectivement une pluralité de signaux d'interférence résultant d'interférences entre le faisceau de mesure réfléchi et le faisceau de référence (616) pour une pluralité de points de mesure sur l'interface (103) ;
- des moyens de positionnement (608, 611) configurés pour positionner relativement une zone de cohérence des moyens de mesure interférométriques au niveau de l'interface à mesurer ;
et **caractérisé en ce que** ledit dispositif comprend :
- des moyens numériques de traitement configurés pour :
∘ construire une interface mathématique à partir d'au moins un sous-ensemble de signaux d'interférence pour l'interface,
∘ déterminer, à partir de l'interface mathématique et d'une forme attendue d'au moins une première section de l'interface, une information géométrique de l'interface (103) à mesurer, les moyens numériques de traitement étant configurés pour :
• déduire des paramètres d'un modèle ou d'une formulation analytique de la première section de l'interface (103) ;
• modéliser la forme d'une seconde section de l'interface à mesurer (103), à partir des paramètres déduits, la seconde section de l'interface étant égale à ou différente de la première section de l'interface.

13. Dispositif selon la revendication précédente, **caractérisé en ce que** les moyens de mesure interférométriques (4000) comprennent un capteur interférométrique, dit capteur interférométrique en mode point, configuré pour détecter un signal d'interférences ponctuel en un point du champ de vue.

14. Dispositif selon la revendication 12 ou 13, **caractérisé en ce que** les moyens de mesure interférométriques (6000) comprennent un capteur interférométrique, dit capteur interférométrique en plein champ, configuré pour détecter un signal d'interférence en plein champ dans le champ de vue.

15. Dispositif selon l'une quelconque des revendications 12 à 14, **caractérisé en ce que** les moyens de positionnement (608, 611) sont configurés pour positionner la zone de cohérence successivement au niveau de différentes interfaces de l'élément optique.

16. Dispositif selon l'une quelconque des revendications 12 à 15, **caractérisé en ce qu'**il comprend en outre des moyens de déplacement configurés pour déplacer l'élément optique relativement au faisceau de mesure dans un plan perpendiculaire à un axe de mesure.

17. Dispositif selon l'une quelconque des revendications 12 à 16, **caractérisé en ce qu'**il comprend en outre des moyens de déplacement angulaire configurés pour déplacer un axe optique de l'élément optique relativement à un axe de mesure.

## Patentansprüche

1. Messverfahren (10) zum Messen einer geometrischen Information einer zu messenden Grenzfläche (103) eines optischen Elements (1000), umfassend mindestens zwei Grenzflächen, wobei das Verfahren (10) durch eine Messvorrichtung durchgeführt wird, umfassend interferometrische Messmittel (4000, 6000) mit mindestens einem optischen Sensor (403, 602) und einer Quelle (402, 612) mit geringer Kohärenz, die zum Richten eines Messstrahls (106, 606) zu dem optischen Element (1000) hin, um mindestens eine der mindestens zwei Grenzflächen zu durchlaufen und um durch die zu messende Grenzfläche (103) reflektiert zu werden und einen reflektierten Messstrahl zu generieren, und zum selektiven Erfassen eines Interferenzsignals, das aus Interferenzen zwischen dem reflektierten Messstrahl und einem Referenzstrahl (616) resultiert, konfiguriert sind, die Vorrichtung ferner umfassend Positionierungsmittel (608, 611) und digitale Verarbeitungsmittel, wobei das Verfahren (10) die folgenden Schritte umfasst:
- relatives Positionieren (12), durch die Positionierungsmittel (608, 611), einer Kohärenzzone der interferometrischen Messmittel an einer zu messenden Grenzfläche (103);
- Messen (14) der Grenzfläche (103) durch die interferometrischen Messmittel, um eine Vielzahl von Interferenzsignalen zu erzeugen, die einer Vielzahl von Messpunkten auf der Grenzfläche (103) entsprechen;
und **dadurch gekennzeichnet, dass** das Verfahren die folgenden Schritte umfasst:
- Verarbeiten (16) der Interferenzsignale durch die digitalen Verarbeitungsmittel, wobei die Verarbeitung die folgenden Schritte umfasst:
○ Konstruieren (17) einer mathematischen Grenzfläche aus mindestens einer Teilmenge von Interferenzsignalen für die Grenzfläche (103),
○ Bestimmen (18), aus der mathematischen Grenzfläche und aus einer erwarteten Form (104a, 104b) mindestens eines ersten Abschnitts der Grenzfläche (103), einer geometrischen Information der zu messenden Grenzfläche, wobei der Schritt (18) des Bestimmens durch die folgenden Schritte umgesetzt wird:
• Ableiten von Parametern eines Modells oder einer analytischen Formulierung des ersten Abschnitts der Grenzfläche (103);
• Modellieren der Form eines zweiten Abschnitts der zu messenden Grenzfläche (103) aus den abgeleiteten Parametern, wobei der zweite Abschnitt der Grenzfläche gleich dem ersten Abschnitt der Grenzfläche ist oder sich davon unterscheidet.

2. Verfahren (10) nach Anspruch 1, **dadurch gekennzeichnet, dass** der erste Abschnitt der Grenzfläche mindestens ein Oberflächenelement umfasst.

3. Verfahren (10) nach Anspruch 1 oder 2, **dadurch gekennzeichnet, dass** der Schritt (17) des Konstruierens der mathematischen Grenzfläche durch das Erzeugen einer Messung, die Informationen über die relative Position der Grenzfläche vorweist und/oder einer Messung der Amplitude des Interferenzsignals, für jedes Interferenzsignal der Teilmenge von Interferenzsignalen umgesetzt wird.

4. Verfahren (10) nach einem der vorstehenden Ansprüche, **dadurch gekennzeichnet, dass** die erwartete Form (104a, 104b) der Grenzfläche eine Interpolationsfunktion zum Interpolieren der Messpunkte umfasst.

5. Verfahren (10) nach einem der Ansprüche 1 bis 3, **dadurch gekennzeichnet, dass** die erwartete Form (104a, 104b) der Grenzfläche ein theoretisches Profil mindestens des ersten Abschnitts der Grenzfläche umfasst.

6. Verfahren (10) nach einem der vorstehenden Ansprüche, **dadurch gekennzeichnet, dass** es ferner einen Schritt (20) des Analysierens der Grenzfläche durch Auswerten der geometrischen Information umfasst, um mindestens eine der folgenden Informationen zu erzeugen:
- eine Dezentrierung und/oder eine Neigung der Grenzfläche;
- eine relative Position, eine Dezentrierung und/oder eine Neigung einer Grenzfläche relativ zu einer anderen;
- einen Abstand zwischen charakteristischen Punkten zweier Grenzflächen.

7. Verfahren (10) nach einem der vorstehenden Ansprüche, **dadurch gekennzeichnet, dass** mindestens der Schritt (12) des Positionierens der Kohärenzzone und der Schritt (14) des Messens für die Messung der geometrischen Information von unterschiedlichen zu messenden Grenzflächen nacheinander durchgeführt werden.

8. Verfahren (10) nach einem der vorstehenden Ansprüche, **dadurch gekennzeichnet, dass** der Verarbeitungsschritt (16) des Interferenzsignals ferner einen Korrekturschritt (19) unter Berücksichtigung einer geometrischen Information der durch den Messstrahl durchquerten Grenzflächen zum Erhalten einer geometrischen Information über die zu messende Grenzfläche (103) umfasst.

9. Verfahren (10) nach einem der vorstehenden Ansprüche, **dadurch gekennzeichnet, dass** es ferner einen Schritt (22) des Winkelkorrigierens einer optischen Achse des optischen Elements in Bezug auf eine Messachse umfasst.

10. Verfahren (10) nach einem der vorstehenden Ansprüche, **dadurch gekennzeichnet, dass** der Verarbeitungsschritt (16) des Interferenzsignals ein Berechnungsverfahren durch digitale Holographie durchführt.

11. Verfahren (10) nach einem der vorstehenden Ansprüche, **dadurch gekennzeichnet, dass** es zum Messen der Formen und/oder der Positionen der Grenzflächen eines optischen Elements in Form einer optischen Baugruppe mit Linsen, wie z. B. ein Smartphone-Objektiv, durchgeführt wird, wobei die Grenzflächen die Oberflächen der Linsen umfassen.

12. Messvorrichtung zum Messen einer geometrischen Information einer zu messenden Grenzfläche (103) eines optischen Elements (1000), umfassend mindestens zwei Grenzflächen, die Vorrichtung umfassend:
- interferometrische Messmittel (4000, 6000), umfassend mindestens eine Lichtquelle mit geringer Kohärenz (402, 612) und mindestens einen optischen Sensor (403, 602), die konfiguriert sind zum:
○ Ausbilden mindestens eines Messstrahls (106, 606) und mindestens eines Referenzstrahls (616),
○ Richten des Messstrahls (106, 606) zu dem optischen Element hin, um mindestens eine der mindestens zwei Grenzflächen zu durchlaufen und um durch die zu messende Grenzfläche (103) reflektiert zu werden und einen reflektierten Messstrahl zu generieren,
○ selektives Erfassen einer Vielzahl von Interferenzsignalen, die aus Interferenzen zwischen dem reflektierten Messstrahl und dem Referenzstrahl (616) für eine Vielzahl von Messpunkten auf der Grenzfläche (103) resultieren;
- Positionierungsmittel (608, 611), die zum relativen Positionieren einer Kohärenzzone der interferometrischen Messmittel an der zu messenden Grenzfläche konfiguriert sind;
und **dadurch gekennzeichnet, dass** die Vorrichtung umfasst:
- digitale Verarbeitungsmittel, die konfiguriert sind zum:
○ Konstruieren einer mathematischen Grenzfläche aus mindestens einer Teilmenge von Interferenzsignalen für die Grenzfläche,
○ Bestimmen, aus der mathematischen Grenzfläche und aus einer erwarteten Form mindestens eines ersten Abschnitts der Grenzfläche, einer geometrischen Information der zu messenden Grenzfläche (103), wobei die digitalen Verarbeitungsmittel konfiguriert sind zum:
• Ableiten von Parametern eines Modells oder einer analytischen Formulierung des ersten Abschnitts der Grenzfläche (103);
• Modellieren der Form eines zweiten Abschnitts der zu messenden Grenzfläche (103) aus den abgeleiteten Parametern, wobei der zweite Abschnitt der Grenzfläche gleich dem ersten Abschnitt der Grenzfläche ist oder sich davon unterscheidet.

13. Vorrichtung nach dem vorstehenden Anspruch, **dadurch gekennzeichnet, dass** die interferometrischen Messmittel (4000) einen interferometrischen Sensor, genannt interferometrischer Punktmodussensor, der zum Erfassen eines Interferenzpunktsignals in einem Punkt des Sichtfelds konfiguriert ist, umfassen.

14. Vorrichtung nach Anspruch 12 oder 13, **dadurch gekennzeichnet, dass** die interferometrischen Messmittel (6000) einen interferometrischen Sensor, genannt interferometrischer Vollfeldsensor, der zum Erfassen eines Vollfeldinterferenzsignals in dem Sichtfeld konfiguriert ist, umfassen.

15. Vorrichtung nach einem der Ansprüche 12 bis 14, **dadurch gekennzeichnet, dass** die Positionierungsmittel (608, 611) zum aufeinanderfolgenden Positionieren der Kohärenzzone an unterschiedlichen Grenzflächen des optischen Elements konfiguriert sind.

16. Vorrichtung nach einem der Ansprüche 12 bis 15, **dadurch gekennzeichnet, dass** sie ferner Verschiebungsmittel umfasst, die zum Verschieben des optischen Elements relativ zu dem Messstrahl in einer Ebene senkrecht zu einer Messachse konfiguriert sind.

17. Vorrichtung nach einem der Ansprüche 12 bis 16, **dadurch gekennzeichnet, dass** sie ferner Winkelverschiebungsmittel umfasst, die zum Verschieben einer optischen Achse des optischen Elements relativ zu einer Messachse konfiguriert sind.

## Claims

1. Measurement method (10), for measuring an item of geometric information of an interface (103) to be measured of an optical element (1000) comprising at least two interfaces, the method (10) being implemented by a measurement device comprising interferometric measurement means (4000, 6000) with at least one optical sensor (403, 602) and a low-coherence source (402, 612), configured to direct a measurement beam (106, 606) towards the optical element (1000) so as to pass through at least one of the at least two interfaces, and to be reflected by the interface (103) to be measured and generate a reflected measurement beam, and to selectively detect an interference signal resulting from interferences between the reflected measurement beam and a reference beam (616), the device also comprising positioning means (608, 611) and digital processing means,
such that said method (10) comprises the following steps:
- relative positioning (12), by the positioning means (608, 611), of a coherence area of the interferometric measurement means at an interface (103) to be measured;
- measuring (14) the interface (103) by the interferometric measurement means, so as to produce a plurality of interference signals corresponding to a plurality of measurement points on the interface (103);
and **characterized in that** the method comprises the following steps:
- processing (16) interference signals by the digital processing means, the processing comprising the following steps:
∘ constructing (17) a mathematical interface based on at least one sub-set of interference signals for the interface (103),
∘ determining (18), based on the mathematical interface and an expected shape (104a, 104b) of at least one first section of the interface (103), an item of geometric information of the interface to be measured, the step of determining being performed by the following steps:
• deducing parameters of a model or of an analytical formulation of the first section of the interface (103);
• modelling the shape of a second section of the interface to be measured (103), based on the parameters deduced, the second section of the interface being equal to or different from the first section of the interface.

2. Method (10) according to claim 1, **characterized in that** the first section of the interface comprises at least one surface element.

3. Method (10) according to claim 1 or 2, **characterized in that** the step (17) of constructing the mathematical interface is performed by producing a measurement including an item of relative position information of the interface and/or a measurement of amplitude of the interference signal, for each interference signal of the sub-set of interference signals.

4. Method (10) according to any one of the preceding claims, **characterized in that** the expected shape (104a, 104b) of the interface comprises an interpolation function for interpolating the measurement points.

5. Method (10) according to any one of claims 1 to 3, **characterized in that** the expected shape (104a, 104b) of the interface comprises a theoretical profile of at least the first section of the interface.

6. Method (10) according to any one of the preceding claims, **characterized in that** it also comprises a step (20) of analysis of the interface by utilizing the geometric information, so as to produce at least one of the following items of information:
- a decentration and/or a tilt of the interface;
- a relative position, decentration and/or tilt of one interface with respect to another;
- a distance between characteristic points of two interfaces.

7. Method (10) according to any one of the preceding claims, **characterized in that** at least the step (12) of positioning the coherence area and the step (14) of measurement are implemented sequentially for measuring the geometric information of different interfaces to be measured.

8. Method (10) according to any one of the preceding claims, **characterized in that** the step (16) of processing the interference signals also comprises a correction step (19) taking into account an item of geometric information of the interfaces passed through by the measurement beam, in order to obtain an item of geometric information of the interface (103) to be measured.

9. Method (10) according to any one of the preceding claims, **characterized in that** it also comprises a step (22) of correcting the angle of an optical axis of the optical element with respect to a measurement axis.

10. Method (10) according to any one of the preceding claims, **characterized in that** the step (16) of processing the interference signals implements a calculation method by digital holography.

11. Method (10) according to any one of the preceding claims, **characterized in that** it is implemented to measure the shapes and/or the positions of the interfaces of an optical element in the form of an optical assembly with lenses, such as a smartphone objective, the interfaces comprising the surfaces of the lenses.

12. Measurement device, for measuring an item of geometric information of an interface (103) to be measured of an optical element (1000) comprising at least two interfaces, the device comprising:
- interferometric measurement means (4000, 6000) comprising at least one low-coherence light source (402, 612) and at least one optical sensor (403, 602), configured to:
∘ form at least one measurement beam (106, 606) and at least one reference beam (616),
∘ direct the measurement beam (106, 606) towards the optical element so as to pass through at least one of the at least two interfaces and to be reflected by the interface (103) to be measured and generate a reflected measurement beam,
∘ selectively detect a plurality of interference signals resulting from interferences between the reflected measurement beam and the reference beam (616) for a plurality of measurement points on the interface (103);
- positioning means (608, 611) configured to position relatively a coherence area of the interferometric measurement means at the interface to be measured;
and **characterized in that** said device comprises:
- digital processing means configured to:
∘ construct a mathematical interface based on at least one sub-set of interference signals for the interface,
∘ determine, based on the mathematical interface and an expected shape of at least one first section of the interface, an item of geometric information of the interface (103) to be measured, the digital processing means being configured to:
• deduce parameters of a model or of an analytical formulation of the first section of the interface (103);
• model the shape of a second section of the interface to be measured (103), based on the parameters deduced, the second section of the interface being equal to or different from the first section of the interface.

13. Device according to the preceding claim, **characterized in that** the interferometric measurement means (4000) comprise an interferometric sensor, called point-mode interferometric sensor, configured to detect a point interference signal at a point of the field of view.

14. Device according to claim 12 or 13, **characterized in that** the interferometric measurement means (6000) comprise an interferometric sensor, called full-field interferometric sensor, configured to detect a full-field interference signal in the field of view.

15. Device according to any one of claims 12 to 14, **characterized in that** the positioning means (608, 611) are configured to position the coherence area successively at different interfaces of the optical element.

16. Device according to any one of claims 12 to 15, **characterized in that** it also comprises displacement means configured to displace the optical element with respect to the measurement beam in a plane perpendicular to a measurement axis.

17. Device according to any one of claims 12 to 16, **characterized in that** it also comprises angular displacement means configured to displace an optical axis of the optical element with respect to a measurement axis.
